# EUROPEAN PATENT APPLICATION

(11) **EP 4 667 502 A1**
(43) Date of publication of application: **24.12.2025**
(21) Application number: 24771072.6
(22) Date of filing: 21.02.2024
(51) Int. Cl.: C08F 236/12, C08F 2/44, C08F 2/22, C08J 5/02

(54) **HIGHLY DURABLE COMPOSITION FOR LATEX POLYMERIZATION, DIP MOLDING LATEX, AND DIP-MOLDED ARTICLE PREPARED THEREFROM**

(30) Priority: 13.03.2023 KR 20230032652
(71) Applicant: Korea Kumho Petrochemical Co., Ltd., Seoul 04542 (KR)
(72) Inventor: JEON, Jong Jin, Sejong 30150 (KR); YANG, Kun Ho, Daejeon 34049 (KR)
(74) Representative: Stolmár & Partner Patentanwälte PartG mbB
(86) International application number: PCT/KR2024/002265
(87) International publication number: WO 2024/191072

(57) **Abstract**

One embodiment of the present specification provides a composition for latex polymerization, comprising a conjugated diene monomer, an ethylenically unsaturated nitrile monomer, an ethylenically unsaturated acid monomer, an ionic organic compound, and an ionic inorganic compound, wherein the weight ratio of the ionic inorganic compound to the ionic organic compound is 4.7 or more.

## Description

### [Technical Field]

The present specification relates to a composition for latex polymerization with excellent durability, a latex for dip molding, and a dip-molded article manufactured therefrom.

### [Background Art]

Conventionally, the main raw material for gloves used for medical, agricultural/livestock product processing, or industrial purposes was natural rubber latex. However, when using gloves manufactured from natural rubber latex, a problem frequently occurred where the user of the gloves suffered from contact allergic diseases due to proteins contained in the natural rubber latex. Accordingly, attempts have been made to manufacture gloves by applying synthetic rubber latex that does not contain proteins, such as nitrile-based copolymer latex. Nitrile-based copolymer latex gloves have superior mechanical strength compared to natural rubber latex gloves, and thus the demand for them is increasing in the medical or food fields where frequent contact with sharp objects occurs.

As the usage of nitrile-based copolymer latex increases, the need for improving the quality of dip-molded articles is increasing, and accordingly, attempts to improve the durability, such as tensile strength and elongation, of dip-molded articles manufactured from latex for dip molding are being conducted. However, despite these attempts to improve mechanical properties, cases continue to arise where personal accidents occur or desired objectives are not achieved due to the breakage of dip-molded articles.

This is because the physical properties of the molded article deteriorate upon contact with weakly acidic human skin or body fluids such as sweat during actual use of the molded article. Conventional mechanical properties, tensile strength and elongation, are measured in air at room temperature, so if these characteristics are excellent, the durability of the dip-molded article before use can be guaranteed, but cases occurred where durability under actual use conditions was poor. Therefore, the development of technology for manufacturing dip-molded articles with excellent durability under actual use conditions is required.

In addition, the demand for high solid content latex for dip molding, which exhibits excellent quality even in small amounts, is increasing. However, when increasing the solid content by concentrating conventional latex for dip molding, there is a problem that the viscosity rapidly increases above a certain content due to a decrease in particle stability. Furthermore, latex for dip molding generally includes particulate polymers having an average particle diameter of around 800 Å. When this is concentrated to improve the quality of the latex, or enlarged by chemical treatment or the like, there is a problem that the stability of the latex rapidly decreases.

Therefore, there is a need for the development of a latex for dip molding and a dip-molded article that simultaneously satisfy high solid content, large particle diameter, and low viscosity, which are in a trade-off relationship, while also having excellent durability in actual use.

### [Disclosure]

### [Technical Problem]

The subject matter of the present specification is to solve the problems of the prior art described above. One object of the present specification is to provide a latex for dip molding having excellent stability and thus exhibiting large particle diameter, high solid content, and low viscosity characteristics, and a composition for polymerization for manufacturing the same.

Another object of the present specification is to provide a dip-molded article having excellent durability in actual use.

### [Technical Solution]

According to one aspect, there is provided a composition for latex polymerization, comprising a conjugated diene monomer, an ethylenically unsaturated nitrile monomer, an ethylenically unsaturated acid monomer, an ionic organic compound, and an ionic inorganic compound, wherein the weight ratio of the ionic inorganic compound to the ionic organic compound is 4.7 or more.

In one embodiment, the conjugated diene monomer may be one selected from the group consisting of 1,3-butadiene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, and combinations of two or more thereof.

In one embodiment, the ethylenically unsaturated nitrile monomer may be one selected from the group consisting of acrylonitrile, methacrylonitrile, fumaronitrile, α-chloronitrile, α-cyanoethylacrylonitrile, and combinations of two or more thereof.

In one embodiment, the ethylenically unsaturated acid monomer may be one selected from the group consisting of acrylic acid, methacrylic acid, itaconic acid, maleic acid, fumaric acid, maleic anhydride, citraconic anhydride, styrenesulfonic acid, monobutyl fumarate, monobutyl maleate, mono-2-hydroxypropyl maleate, and combinations of two or more thereof.

In one embodiment, the ionic organic compound may be one selected from the group consisting of ethylenediaminetetraacetic acid (EDTA) or its sodium salt, ethylene glycol tetraacetic acid (EGTA) or its sodium salt, nitrilotriacetic acid (NTA) or its sodium salt, iminodiacetic acid (IDA) or its sodium salt, quinolinic acid (QNA) or its sodium salt, and combinations of two or more thereof.

In one embodiment, the ionic inorganic compound may be one selected from the group consisting of potassium sulfate (K₂SO₄), sodium carbonate (Na₂CO₃), sodium chloride (NaCl), potassium chloride

(KCl), calcium chloride (CaCl₂), magnesium chloride (MgCl₂), sodium nitrate (NaNO₃), potassium nitrate (KNO₃), calcium nitrate (Ca(NO₃)₂), magnesium nitrate (Mg(NO₃)₂), sodium sulfate (Na₂SO₄), calcium sulfate (CaSO₄), magnesium sulfate (MgSO₄), sodium hydroxide (NaOH), potassium hydroxide (KOH), calcium hydroxide (Ca(OH)₂), magnesium hydroxide (Mg(OH)₂), sodium bicarbonate (NaHCO₃), potassium bicarbonate (KHCO₃), potassium carbonate (K₂CO₃), sodium hydrogen sulfite (NaHSO₄), potassium hydrogen sulfite (KHSO₄), sodium pyrophosphate (Na₄P₂O₇), potassium pyrophosphate (K₄P₂O₇), trisodium phosphate (Na₃PO₄), tripotassium phosphate (K₃PO₄), disodium hydrogen phosphate (Na₂HPO₄), dipotassium hydrogen phosphate (K₂HPO₄), and combinations of two or more thereof.

In one embodiment, the composition may comprise 30 to 98 parts by weight of the conjugated diene monomer, 1 to 55 parts by weight of the ethylenically unsaturated nitrile monomer, and 0.001 to 20 parts by weight of the ethylenically unsaturated acid monomer.

In one embodiment, the composition may further comprise water, an emulsifier, a polymerization initiator, and a molecular weight modifier.

According to another aspect, there is provided a latex for dip molding, comprising a copolymer derived from the composition for latex polymerization.

According to still another aspect, there is provided a dip-molded article manufactured from the latex for dip molding.

In one embodiment, the dip-molded article may be surgical gloves, medical gloves, gloves for agricultural/livestock product processing, industrial gloves, condoms, cosmetic materials, catheters, or healthcare molded articles.

### [Advantageous Effects]

The composition for latex polymerization according to one aspect of the present specification has high ionic conductivity, which can improve the stability of the polymer during polymerization of the latex. Accordingly, the latex for dip molding according to another aspect of the present specification can simultaneously satisfy high solid content, large particle diameter, and low viscosity, which are in a trade-off relationship.

Furthermore, the dip-molded article according to still another aspect of the present specification has excellent durability in actual use, and thus can be applied to various fields such as surgical gloves, medical gloves, gloves for agricultural/livestock product processing, industrial gloves, condoms, cosmetic materials, catheters, and healthcare molded articles.

The effects of one aspect of the present specification are not limited to the effects described above, and should be understood to include all effects inferable from the configurations described in the detailed description or claims of the present specification.

### [Modes of the Invention]

Hereinafter, one aspect of the present specification will be described based on specific examples. However, the subject matter of the present specification may be embodied in many different forms and should not be construed as limited to the embodiments set forth herein.

Throughout the specification, when a part is said to be "connected" to another part, this includes not only the case of being "directly connected" but also the case of being "indirectly connected" with another member interposed therebetween. In addition, when a part is said to "comprise" a certain component, this means that other components may be further included, rather than excluding other components, unless specifically stated to the contrary.

When a range of numerical values is described in the present specification, unless the specific range thereof is otherwise described, the value has the precision of the significant figures provided according to the standard rules in chemistry for significant figures. For example, 10 includes the range of 5.0 to 14.9, and the number 10.0 includes the range of 9.50 to 10.49.

### Composition for Latex Polymerization

The composition for latex polymerization according to one aspect of the present specification comprises a conjugated diene monomer, an ethylenically unsaturated nitrile monomer, an ethylenically unsaturated acid monomer, an ionic organic compound, and an ionic inorganic compound.

The ionic organic compound and the ionic inorganic compound can improve the stability of the latex by enhancing the ionic conductivity of the composition, and can form a large particle diameter copolymer of 1,000 Å or more. In addition, the latex comprising the copolymer derived from the composition maintains low viscosity even at a high solid content of 50 wt% or more, thereby simultaneously satisfying high solid content, large particle diameter, and low viscosity, which are in a trade-off relationship.

The weight ratio of the ionic inorganic compound to the ionic organic compound may be 4.7 or more. For example, it may be 4.7, 4.8, 4.9, 5.0, 5.1, 5.2, 5.3, 5.4, 5.5, 5.6, 5.7, 5.8, 5.9, a range between two of these values, or a value of one of these values or more. If the weight ratio of the ionic inorganic compound to the ionic organic compound is less than the above range, the polymerization reaction rate may decrease, leading to a lower final conversion rate. As the amount of residual unreacted monomers increases, the mechanical properties and durability in actual use of the dip-molded article manufactured therefrom may rapidly decrease. Meanwhile, in the present invention, the larger the weight ratio of the ionic inorganic compound to the organic compound, the more advantageous it is for the mechanical properties and durability in actual use of the dip-molded article, so the upper limit is not particularly limited, but it can be limited to 5.9 or less in consideration of the possibility of decay during long-term storage of the latex.

The conjugated diene monomer may be one selected from the group consisting of 1,3-butadiene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, and combinations of two or more thereof, but is not limited thereto. In the copolymer of the latex for dip molding, the structure derived from the conjugated diene monomer can impart flexibility to the dip-molded article.

The ethylenically unsaturated nitrile monomer may be one selected from the group consisting of acrylonitrile, methacrylonitrile, fumaronitrile, α-chloronitrile, α-cyanoethylacrylonitrile, and combinations of two or more thereof, but is not limited thereto. In the copolymer of the latex for dip molding, the structure derived from the ethylenically unsaturated nitrile monomer can improve the strength and chemical resistance of the dip-molded article.

The ethylenically unsaturated acid monomer may be one selected from the group consisting of acrylic acid, methacrylic acid, itaconic acid, maleic acid, fumaric acid, maleic anhydride, citraconic anhydride, styrenesulfonic acid, monobutyl fumarate, monobutyl maleate, mono-2-hydroxypropyl maleate, and combinations of two or more thereof, but is not limited thereto. In the copolymer of the latex for dip molding, the structure derived from the ethylenically unsaturated acid monomer can form a crosslinked structure to improve the mechanical properties of the dip-molded article.

The ionic organic compound and the ionic inorganic compound can improve the stability of the copolymer undergoing reaction during polymerization of the composition for latex polymerization, and can suppress aggregation of the latex even after polymerization.

The ionic organic compound may be one selected from the group consisting of ethylenediaminetetraacetic acid (EDTA) or its sodium salt, ethylene glycol tetraacetic acid (EGTA) or its sodium salt, nitrilotriacetic acid (NTA) or its sodium salt, iminodiacetic acid (IDA) or its sodium salt, quinolinic acid (QNA) or its sodium salt, and combinations of two or more thereof, and may be, for example, ethylenediaminetetraacetic acid (EDTA), but is not limited thereto.

The ionic inorganic compound may be one selected from the group consisting of potassium sulfate (K₂SO₄), sodium carbonate (Na₂CO₃), sodium chloride (NaCl), potassium chloride (KCl), calcium chloride (CaCl₂), magnesium chloride (MgClz), sodium nitrate (NaNO₃), potassium nitrate (KNO₃), calcium nitrate (Ca(NO₃)₂), magnesium nitrate (Mg(NO₃)₂), sodium sulfate (Na₂SO₄), calcium sulfate (CaSO₄), magnesium sulfate (MgSO₄), sodium hydroxide (NaOH), potassium hydroxide (KOH), calcium hydroxide (Ca(OH)₂), magnesium hydroxide (Mg(OH)₂), sodium bicarbonate (NaHCO₃), potassium bicarbonate (KHCO₃), potassium carbonate (K₂CO₃), sodium hydrogen sulfite (NaHSO₄), potassium hydrogen sulfite (KHSO₄), sodium pyrophosphate (Na₄P₂O₇), potassium pyrophosphate (K₄P₂O₇), trisodium phosphate (Na₃PO₄), tripotassium phosphate (K₃PO₄), disodium hydrogen phosphate (Na₂HPO₄), dipotassium hydrogen phosphate (K₂HPO₄), and combinations of two or more thereof, and may be, for example, a combination of potassium sulfate and sodium carbonate, but is not limited thereto.

The composition may comprise 30 to 98 parts by weight of the conjugated diene monomer, 1 to 55 parts by weight of the ethylenically unsaturated nitrile monomer, and 0.001 to 20 parts by weight of the ethylenically unsaturated acid monomer, but is not limited thereto.

For example, the content of the conjugated diene monomer in the composition may be 30 parts by weight, 32 parts by weight, 34 parts by weight, 36 parts by weight, 38 parts by weight, 40 parts by weight, 42 parts by weight, 44 parts by weight, 46 parts by weight, 48 parts by weight, 50 parts by weight, 52 parts by weight, 54 parts by weight, 56 parts by weight, 58 parts by weight, 60 parts by weight, 62 parts by weight, 64 parts by weight, 66 parts by weight, 68 parts by weight, 70 parts by weight, 72 parts by weight, 74 parts by weight, 76 parts by weight, 78 parts by weight, 80 parts by weight, 82 parts by weight, 84 parts by weight, 86 parts by weight, 88 parts by weight, 90 parts by weight, 92 parts by weight, 94 parts by weight, 96 parts by weight, 98 parts by weight, or a range between two of these values. If the content of the conjugated diene monomer is less than the above range, the dip-molded article may be excessively hardened, resulting in poor wearing comfort. If it exceeds the above range, the durability or chemical resistance of the dip-molded article may be reduced.

The content of the ethylenically unsaturated nitrile monomer in the composition may be 1 part by weight, 2.5 parts by weight, 5 parts by weight, 7.5 parts by weight, 10 parts by weight, 12.5 parts by weight, 15 parts by weight, 17.5 parts by weight, 20 parts by weight, 22.5 parts by weight, 25 parts by weight, 27.5 parts by weight, 30 parts by weight, 32.5 parts by weight, 35 parts by weight, 37.5 parts by weight, 40 parts by weight, 42.5 parts by weight, 45 parts by weight, 47.5 parts by weight, 50 parts by weight, 52.5 parts by weight, 55 parts by weight, or a range between two of these values. If the content of the ethylenically unsaturated nitrile monomer is less than the above range, the chemical resistance or mechanical strength of the dip-molded article may be reduced. If it exceeds the above range, the elongation of the dip-molded article may be reduced, leading to decreased usability.

The content of the ethylenically unsaturated acid monomer in the composition may be 0.001 parts by weight, 0.5 parts by weight, 1 part by weight, 1.5 parts by weight, 2 parts by weight, 2.5 parts by weight, 3 parts by weight, 3.5 parts by weight, 4 parts by weight, 4.5 parts by weight, 5 parts by weight, 5.5 parts by weight, 6 parts by weight, 6.5 parts by weight, 7 parts by weight, 7.5 parts by weight, 8 parts by weight, 8.5 parts by weight, 9 parts by weight, 9.5 parts by weight, 10 parts by weight, 10.5 parts by weight, 11 parts by weight, 11.5 parts by weight, 12 parts by weight, 12.5 parts by weight, 13 parts by weight, 13.5 parts by weight, 14 parts by weight, 14.5 parts by weight, 15 parts by weight, 15.5 parts by weight, 16 parts by weight, 16.5 parts by weight, 17 parts by weight, 17.5 parts by weight, 18 parts by weight, 18.5 parts by weight, 19 parts by weight, 19.5 parts by weight, 20 parts by weight, or a range between two of these values. If the content of the ethylenically unsaturated acid monomer is less than the above range, the tensile strength of the dip-molded article may be reduced. If it exceeds the above range, the dip-molded article may be excessively hardened, resulting in poor wearing comfort.

The conjugated diene monomer may include isoprene. For example, the conjugated diene monomer may include isoprene and one or more conjugated diene monomers other than isoprene.

The conjugated diene monomer may include 29 to 97 parts by weight of isoprene and 1 to 50 parts by weight of a conjugated diene monomer other than isoprene, but is not limited thereto. For example, the content of the isoprene may be 29 parts by weight, 30 parts by weight, 35 parts by weight, 40 parts by weight, 45 parts by weight, 50 parts by weight, 55 parts by weight, 60 parts by weight, 65 parts by weight, 70 parts by weight, 75 parts by weight, 80 parts by weight, 85 parts by weight, 90 parts by weight, 95 parts by weight, 97 parts by weight, or a range between two of these values. If the content of isoprene is less than the above range, the durability of the dip-molded article manufactured from the composition may be reduced.

The weight ratio of the isoprene to the ethylenically unsaturated nitrile monomer may be 1.0 to 3.5. If the weight ratio of isoprene to the ethylenically unsaturated nitrile monomer is outside the above range, the durability of the dip-molded article manufactured from the composition may be reduced.

The weight ratio of the ethylenically unsaturated acid monomer to the ethylenically unsaturated nitrile monomer may be 0.1 to 0.4. If the weight ratio of the ethylenically unsaturated acid monomer to the ethylenically unsaturated nitrile monomer is outside the above range, the durability of the dip-molded article manufactured from the composition may be reduced.

In the present specification, "total monomers" means the sum of the conjugated diene monomer, the ethylenically unsaturated nitrile monomer, and the ethylenically unsaturated acid monomer. However, the composition for latex polymerization may further comprise polymerizable monomers other than the aforementioned conjugated diene monomer, ethylenically unsaturated nitrile monomer, and ethylenically unsaturated acid monomer, in which case "total monomers" further includes the polymerizable monomers.

The total content of the ionic organic compound and the ionic inorganic compound may vary depending on the monomer composition ratio and the type of ionic compound. The total content of the ionic organic compound and the ionic inorganic compound may be 0.1 to 0.6 parts by weight based on 100 parts by weight of the total monomers. For example, it may be 0.1 parts by weight, 0.11 parts by weight, 0.12 parts by weight, 0.13 parts by weight, 0.14 parts by weight, 0.15 parts by weight, 0.16 parts by weight, 0.17 parts by weight, 0.18 parts by weight, 0.19 parts by weight, 0.2 parts by weight, 0.21 parts by weight, 0.22 parts by weight, 0.23 parts by weight, 0.24 parts by weight, 0.25 parts by weight, 0.26 parts by weight, 0.27 parts by weight, 0.28 parts by weight, 0.29 parts by weight, 0.3 parts by weight, 0.31 parts by weight, 0.32 parts by weight, 0.33 parts by weight, 0.34 parts by weight, 0.35 parts by weight, 0.36 parts by weight, 0.37 parts by weight, 0.38 parts by weight, 0.39 parts by weight, 0.4 parts by weight, 0.41 parts by weight, 0.42 parts by weight, 0.43 parts by weight, 0.44 parts by weight, 0.45 parts by weight, 0.46 parts by weight, 0.47 parts by weight, 0.48 parts by weight, 0.49 parts by weight, 0.5 parts by weight, 0.51 parts by weight, 0.52 parts by weight, 0.53 parts by weight, 0.54 parts by weight, 0.55 parts by weight, 0.56 parts by weight, 0.57 parts by weight, 0.58 parts by weight, 0.59 parts by weight, 0.6 parts by weight, or a range between two of these values. If the total content of the ionic organic compound and the ionic inorganic compound is less than the above range, the ionic conductivity of the composition may decrease or the stability of the latex may decrease. Due to the high polymerization reaction rate, the particle diameter of the latex decreases and the viscosity increases, which may cause difficulties in product storage and reaction heat control. If the total content of the ionic organic compound and the ionic inorganic compound exceeds the above range, the polymerization reaction rate may decrease, leading to a lower final conversion rate, and the mechanical properties and durability in actual use of the dip-molded article manufactured therefrom may decrease.

The ionic conductivity of the composition may be 250 µS/cm or more. For example, it may be 250 µS/cm, 255 µS/cm, 260 µS/cm, 265 µS/cm, 270 µS/cm, 275 µS/cm, 280 µS/cm, 285 µS/cm, 290 µS/cm, 295 µS/cm, 300 µS/cm, 305 µS/cm, 310 µS/cm, 315 µS/cm, 320 µS/cm, 325 µS/cm, 330 µS/cm, 335 µS/cm, 340 µS/cm, 345 µS/cm, 350 µS/cm, 355 µS/cm, 360 µS/cm, 365 µS/cm, 370 µS/cm, 375 µS/cm, 380 µS/cm, 385 µS/cm, 390 µS/cm, 395 µS/cm, 400 µS/cm, a range between two of these values, or a value of one of these values or more. If the ionic conductivity of the composition is less than the above range, the stability of the polymerized latex may decrease, and the viscosity may rapidly increase during solid content concentration.

The ionic conductivity of the composition may be 10 mS/cm or less, 5 mS/cm or less, or 1 mS/cm or less, but is not limited thereto. If the ionic conductivity of the composition is excessively high, components unnecessary for polymerization may increase, leading to decreased stability of the latex.

The composition may further comprise water, an emulsifier, a polymerization initiator, and a molecular weight modifier.

The content of the water may be 75 to 150 parts by weight based on 100 parts by weight of the total monomers, for example, 75 parts by weight, 77.5 parts by weight, 80 parts by weight, 82.5 parts by weight, 85 parts by weight, 87.5 parts by weight, 90 parts by weight, 92.5 parts by weight, 95 parts by weight, 97.5 parts by weight, 100 parts by weight, 102.5 parts by weight, 105 parts by weight, 107.5 parts by weight, 110 parts by weight, 112.5 parts by weight, 115 parts by weight, 117.5 parts by weight, 120 parts by weight, 122.5 parts by weight, 125 parts by weight, 127.5 parts by weight, 130 parts by weight, 132.5 parts by weight, 135 parts by weight, 137.5 parts by weight, 140 parts by weight, 142.5 parts by weight, 145 parts by weight, 147.5 parts by weight, 150 parts by weight, or a range between two of these values. If the content of water is less than the above range, the viscosity during polymerization may excessively increase, making it difficult to manufacture the molded article. If it exceeds the above range, the solid content may become excessively low. The water may have an ionic conductivity of 5 µS/cm or less, 2.5 µS/cm or less, or 1 µS/cm or less. For example, the water may be ion-exchanged water, ultrapure water, or purified water. If water with high ionic conductivity is used, impurities that adversely affect polymerization stability or latex stability may be included.

The emulsifier may be an anionic surfactant, a nonionic surfactant, a cationic surfactant, or an amphoteric surfactant. For example, as the anionic surfactant, one or more selected from the group consisting of alkylbenzene sulfonates, aliphatic sulfonates, sulfate ester salts of higher alcohols, α-olefin sulfonates, and alkyl ether sulfate ester salts may be used, but it is not limited thereto. The emulsifier may be used in an amount of 0.8 to 8 parts by weight based on 100 parts by weight of the total monomers.

The polymerization initiator may be a radical initiator. The radical initiator may be, for example, one or more of: inorganic peroxides selected from the group consisting of sodium persulfate, potassium persulfate, ammonium persulfate, potassium perphosphate, and hydrogen peroxide; organic peroxides selected from the group consisting of t-butyl peroxide, cumene hydroperoxide, p-menthane hydroperoxide, di-t-butyl peroxide, t-butylcumyl peroxide, acetyl peroxide, isobutyl peroxide, octanoyl peroxide, dibenzoyl peroxide, 3,5,5-trimethylhexanol peroxide, and t-butylperoxyisobutyrate; azo initiators selected from the group consisting of azobisisobutyronitrile, azobis-2,4-dimethylvaleronitrile, azobiscyclohexanecarbonitrile, and methyl azobisisobutyrate, but is not limited thereto. The polymerization initiator may be used in an amount of 0.01 to 1.5 parts by weight based on 100 parts by weight of the total monomers.

The molecular weight modifier may be mercaptans such as α-methylstyrene dimer, t-dodecyl mercaptan, n-dodecyl mercaptan, and octyl mercaptan; halogenated hydrocarbons such as carbon tetrachloride, methylene chloride, and methylene bromide; sulfur-containing compounds such as tetraethylthiuram disulfide, dipentamethylenethiuram disulfide, and diisopropylxanthogen disulfide, but is not limited thereto. The content of the molecular weight modifier may be 0.1 to 1 part by weight based on 100 parts by weight of the total monomers. For example, it may be 0.1 parts by weight, 0.15 parts by weight, 0.2 parts by weight, 0.25 parts by weight, 0.3 parts by weight, 0.35 parts by weight, 0.4 parts by weight, 0.45 parts by weight, 0.5 parts by weight, 0.55 parts by weight, 0.6 parts by weight, 0.65 parts by weight, 0.7 parts by weight, 0.75 parts by weight, 0.8 parts by weight, 0.85 parts by weight, 0.9 parts by weight, 0.95 parts by weight, 1 part by weight, or a range between two of these values. If the content of the molecular weight modifier is less than the above range, gel may be generated, leading to decreased latex stability. If it exceeds the above range, tensile strength may be poor or stress retention may decrease, and in addition, durability in actual use may decrease.

### Latex for Dip Molding

The latex for dip molding according to another aspect of the present specification may comprise a copolymer derived from the aforementioned composition for latex polymerization.

The average particle diameter of the copolymer may be 1,000 to 3,000 Å. For example, it may be 1,000 Å, 1,050 Å, 1,100 Å, 1,150 Å, 1,200 Å, 1,250 Å, 1,300 Å, 1,350 Å, 1,400 Å, 1,450 Å, 1,500 Å, 1,550 Å, 1,600 Å, 1,650 Å, 1,700 Å, 1,750 Å, 1,800 Å, 1,850 Å, 1,900 Å, 1,950 Å, 2,000 Å, 2,050 Å, 2,100 Å, 2,150 Å, 2,200 Å, 2,250 Å, 2,300 Å, 2,350 Å, 2,400 Å, 2,450 Å, 2,500 Å, 2,550 Å, 2,600 Å, 2,650 Å, 2,700 Å, 2,750 Å, 2,800 Å, 2,850 Å, 2,900 Å, 2,950 Å, 3,000 Å, or a range between two of these values. The latex for dip molding is manufactured by polymerizing a composition comprising an ionic organic compound and an ionic inorganic compound, thereby minimizing the decrease in stability and enlarging the particle diameter of the copolymer. Furthermore, the latex may have better stability due to its low oligomer content.

The magnitude (absolute value) of the zeta potential of the latex for dip molding may be 60 mV or more, 62.5 mV or more, 65 mV or more, 67.5 mV or more, or 70 mV or more. A latex satisfying these conditions has excellent stability and can suppress the increase in viscosity even when concentrated to a high solid content of 50 wt% or more.

The viscosity of the latex for dip molding at 25°C may be 50 to 2,500 cps, for example, 50 cps, 75 cps, 100 cps, 125 cps, 150 cps, 175 cps, 200 cps, 225 cps, 250 cps, 275 cps, 300 cps, 325 cps, 350 cps, 375 cps, 400 cps, 425 cps, 450 cps, 475 cps, 500 cps, 525 cps, 550 cps, 575 cps, 600 cps, 625 cps, 650 cps, 675 cps, 700 cps, 725 cps, 750 cps, 775 cps, 800 cps, 825 cps, 850 cps, 875 cps, 900 cps, 925 cps, 950 cps, 975 cps, 1,000 cps, 1,100 cps, 1,200 cps, 1,300 cps, 1,400 cps, 1,500 cps, 1,600 cps, 1,700 cps, 1,800 cps, 1,900 cps, 2,000 cps, 2,100 cps, 2,200 cps, 2,300 cps, 2,400 cps, 2,500 cps, or a range between two of these values. A latex whose viscosity is outside the above range may be practically impossible to manufacture or difficult to dip mold.

The solid content of the latex for dip molding may be 50 to 65 wt%, for example, 50 wt%, 52.5 wt%, 55 wt%, 57.5 wt%, 60 wt%, 62.5 wt%, 65 wt%, or a range between two of these values. If the solid content is outside the above range, the effect due to the aforementioned stability improvement may be unnecessary, or aggregation of the latex may occur.

The characteristics of the latex for dip molding may be measured at pH 8.0 to 10.0, for example, pH 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0. When adjusting the pH of the latex with additives, the solid content and average particle diameter may change, but the latex for dip molding can simultaneously satisfy the aforementioned requirements for average particle diameter, solid content, and viscosity within the above pH range.

The latex for dip molding may further comprise one or more additives selected from the group consisting of chelating agents, dispersants, pH adjusters, deoxidizers, particle diameter adjusters, anti-aging agents, and oxygen scavengers. As these additives, known configurations in the art can be used, and they can be added before or after the polymerization of the copolymer.

The latex for dip molding simultaneously satisfies low viscosity, high solid content, and large particle diameter, so the stability of the latex itself may be excellent. Therefore, deterioration of the quality of the dip-molded article can be prevented even when external impact is applied or during long-term storage.

### Method for Manufacturing Latex for Dip Molding

A method for manufacturing a latex for dip molding according to another aspect of the present specification may comprise the steps of: (a) preparing a monomer mixture comprising a conjugated diene monomer, an ethylenically unsaturated nitrile monomer, and an ethylenically unsaturated acid monomer; (b) introducing an ionic organic compound, an ionic inorganic compound, an emulsifier, and water into the monomer mixture; and (c) introducing a polymerization initiator to manufacture the latex for dip molding.

In step (b), the weight ratio of the ionic inorganic compound to the ionic organic compound introduced may be 4.7 or more.

Step (a) is a step of preparing a monomer mixture comprising a conjugated diene monomer, an ethylenically unsaturated nitrile monomer, and an ethylenically unsaturated acid monomer, which are monomers constituting a carboxylic acid-modified nitrile-based copolymer, and may be performed under a nitrogen atmosphere.

Step (b) is a step of manufacturing the aforementioned composition for latex polymerization by introducing ionic compounds. In step (b), a molecular weight modifier may be further introduced.

The polymerization in step (c) may be performed at 10 to 90°C, for example, at 10°C, 15°C, 20°C, 25°C, 30°C, 35°C, 40°C, 45°C, 50°C, 55°C, 60°C, 65°C, 70°C, 75°C, 80°C, 85°C, 90°C, or a temperature between two of these temperatures, but is not limited thereto, and the polymerization temperature can be adjusted according to the target conversion rate.

The polymerization in step (c) may be performed for 2 to 24 hours, for example, for 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, 20 hours, 21 hours, 22 hours, 23 hours, 24 hours, or a time between two of these times, but is not limited thereto.

Step (c) may further comprise a step of stopping the polymerization by introducing a polymerization terminator.

The polymerization terminator may be one selected from the group consisting of hydroxylamine, hydroxylamine sulfate, diethyl hydroxylamine, hydroxylamine sulfonic acid and its alkali metal ions, sodium dimethyldithiocarbamate, hydroquinone derivatives, aromatic hydroxy dithiocarboxylic acids such as hydroxydiethylbenzene dithiocarboxylic acid and hydroxydibutylbenzene dithiocarboxylic acid, and combinations of two or more thereof. The content of the polymerization terminator may be 0.02 to 1.5 parts by weight based on 100 parts by weight of the monomer mixture.

In step (c), the final conversion rate of the polymerization reaction may be 92% or more. For example, it may be 92% or more, 93% or more, 94% or more, 95% or more, 96% or more, 97% or more, 98% or more, but is not limited thereto. If the conversion rate is less than the above range, as the amount of residual unreacted monomers increases, the mechanical properties and durability in actual use of the dip-molded article manufactured therefrom may decrease.

Other details regarding the raw materials, contents, etc. used in the manufacturing method are as described above.

### Dip-Molded Article

A dip-molded article according to still another aspect of the present specification may be manufactured from the aforementioned latex for dip molding.

The dip-molded article may be manufactured by adding 1 to 2 parts by weight of sulfur, 0.1 to 1 part by weight of zinc oxide, and 0.3 to 1.5 parts by weight of a vulcanization accelerator to the aforementioned latex for dip molding, based on 100 parts by weight of the latex for dip molding, followed by dip molding, but is not limited thereto.

The sulfur can react with the structure derived from the conjugated diene monomer to form a crosslinked structure. When the ionic organic compound and the ionic inorganic compound are introduced in the aforementioned weight ratio range, shrinkage of the molded article due to syneresis during vulcanization can be suppressed. The content of the sulfur may be, for example, 1 part by weight, 1.1 parts by weight, 1.2 parts by weight, 1.3 parts by weight, 1.4 parts by weight, 1.5 parts by weight, 1.6 parts by weight, 1.7 parts by weight, 1.8 parts by weight, 1.9 parts by weight, 2 parts by weight, or a range between two of these values. If the content of sulfur is less than the above range, mechanical properties such as tensile strength and durability in actual use may decrease. If it exceeds the above range, it may cause allergic reactions in the user.

The zinc oxide can form an ionic bond with the structure derived from the ethylenically unsaturated acid to form a crosslinked structure. Furthermore, when the ionic organic compound and the ionic inorganic compound are introduced in the aforementioned weight ratio range, the ionic bond strength can be improved, thereby enhancing durability. The content of the zinc oxide may be, for example, 0.1 parts by weight, 0.2 parts by weight, 0.3 parts by weight, 0.4 parts by weight, 0.5 parts by weight, 0.6 parts by weight, 0.7 parts by weight, 0.8 parts by weight, 0.9 parts by weight, 1 part by weight, or a range between two of these values. If the content of zinc oxide is less than the above range, durability in actual use may decrease. If it exceeds the above range, tensile strength may decrease.

The dip-molded article may be obtained by adjusting the solid content by adding an aqueous potassium hydroxide solution to the latex for dip molding, followed by dip molding, but is not limited thereto.

The tensile strength of the dip-molded article may be 3 MPa or more, 5 MPa or more, 7 MPa or more, 9 MPa or more, 11 MPa or more, 13 MPa or more, 15 MPa or more, 20 MPa or more, 25 MPa or more, 30 MPa or more, or 35 MPa or more, but is not limited thereto. The higher the tensile strength, the better the durability during storage, but other mechanical properties such as elongation may decrease.

The elongation of the dip-molded article may be 600% or more, 650% or more, 700% or more, 750% or more, 800% or more, 850% or more, or 900% or more, but is not limited thereto. The higher the elongation, the better the wearing comfort, etc., but it may be in a trade-off relationship with other mechanical properties.

The durability test result of the dip-molded article according to the following durability test method is 60 minutes or more, which can indicate high quality with excellent durability in actual use. For example, the durability test result of the dip-molded article may be 60 minutes or more, 90 minutes or more, 120 minutes or more, 150 minutes or more, 180 minutes or more, 210 minutes or more, or 240 minutes or more.

### [Durability Test Method]

A dip-molded article having a width of 30 mm, a length of 135 mm, and a thickness of 0.06 to 0.08 mm was elongated by 20% in the longitudinal direction and immersed in a pH 4.0 to 4.3 solution at 35°C. The process of elongating the molded article for 10 seconds so that the longitudinal elongation becomes 50%, fixing it for 2 seconds, and then relaxing it for 10 seconds so that the longitudinal elongation becomes 20% was repeated, and the time until the molded article broke was measured.

The durability test method confirms the breakage of the specimen by repeating elongation and relaxation in a solution at 35°C and pH 4.0 to 4.3, which are conditions similar to skin and body fluids that have a high possibility of contact during actual use of the dip-molded article. For example, if the molded article is a glove, the durability of the dip-molded article under actual use conditions can be measured by simulating the situation where the molded article repeats elongation and relaxation according to the movement of the fingers.

The dip-molded article may be surgical gloves, medical gloves, gloves for agricultural/livestock product processing, industrial gloves, condoms, cosmetic materials, catheters, or healthcare molded articles, but is not limited thereto. For example, the dip-molded article may be surgical gloves or other medical gloves, industrial gloves such as chemical handling gloves, or cosmetic materials such as puffs.

Hereinafter, embodiments of the present specification will be described in more detail. However, the following experimental results describe only representative experimental results among the embodiments, and the scope and content of the present specification cannot be reduced or limitedly interpreted by the examples, etc. The respective effects of various embodiments of the present specification not explicitly presented below will be specifically described in the corresponding parts.

### Examples and Comparative Examples

A 1L high-pressure reactor equipped with a stirrer, a thermometer, a cooler, and a nitrogen gas inlet, and configured to allow continuous introduction of each component such as monomers, emulsifiers, and polymerization initiators, was prepared. As ion-exchanged water, one having a conductivity of 1 µS/cm or less was prepared. After purging the reactor with nitrogen, a monomer mixture prepared by mixing 40 wt% of isoprene (IP), 25 wt% of 1,3-butadiene (BD), 30 wt% of acrylonitrile (AN), and 5 wt% of methacrylic acid (MAA) based on the total weight of the monomer mixture was introduced. Thereafter, based on 100 parts by weight of the monomer mixture, ethylenediaminetetraacetic acid (EDTA) as an ionic organic compound, potassium sulfate (K₂SO₄) and sodium carbonate (Na₂CO₃) as ionic inorganic compounds, 0.5 parts by weight of t-dodecyl mercaptan (TDDM) as a molecular weight modifier, 2 parts by weight of sodium alkylbenzene sulfonate as an emulsifier, and 120 parts by weight of ion-exchanged water were introduced into the reactor to prepare a composition for latex polymerization. After raising the temperature of the reactor to about 40°C, 0.3 parts by weight of potassium persulfate as a polymerization initiator was introduced. After polymerizing for 12 hours, 0.9 parts by weight of sodium hydroxide was introduced to stop the polymerization reaction. Thereafter, unreacted monomers and the like were removed through a deodorization process, and ammonia water, an antioxidant, an antifoaming agent, and the like were added to obtain a carboxylic acid-modified nitrile-based copolymer latex with a pH of 8.5.

The contents of the ionic compounds used in each Example and Comparative Example and the weight ratios therebetween are shown in Table 1 below.

**[Table 1]**

| Classification (parts by weight) | A. Ionic Organic Compound | B. Ionic Inorganic Compound | | | Weight Ratio (B/A) |
|---|---|---|---|---|---|
| | EDTA | K₂SO₄ | Na₂CO₃ | total content | |
| Example 1 | 0.078 | 0.195 | 0.195 | 0.390 | 5.000 |
| Example 2 | 0.055 | 0.1365 | 0.1365 | 0.273 | 5.000 |
| Example 3 | 0.031 | 0.078 | 0.078 | 0.156 | 5.000 |
| Comparative Example 1 | 0.112 | 0.263 | 0.263 | 0.526 | 4.696 |
| Comparative Example 2 | 0.146 | 0.303 | 0.303 | 0.606 | 4.151 |
| Comparative Example 3 | 0 | 0 | 0 | 0 | - |
| * Weight ratio (B/A) = Total content of ionic inorganic compound / Content of ionic organic compound | | | | | |

| | | | | | |
|---|---|---|---|---|---|
| Experimental Example 1 | | | | | |

The final conversion rate, initial conversion rate (after 2 hours of polymerization), average particle diameter, ionic conductivity, solid content, viscosity at 25°C, and zeta potential of the carboxylic acid-modified nitrile-based copolymer latex obtained in the Examples and Comparative Examples were measured and are shown in Table 2 below.
- Average particle diameter (Å): Measured by dynamic laser light scattering using Nanotrac 150.
- Ionic conductivity (µS/cm): Ionic conductivity was determined by the Nyquist plot method after measuring the resistance with an electrochemical impedance spectroscope (EIS) using a two-electrode method. Resistance was measured under the conditions of frequency 60 Hz to 1 kHz, current 10.0 mV, and voltage range ±10 V. Ionic conductivity was measured after calibration with a standard solution in the expected range. Graphite electrodes were used as the electrodes. For ionic conductivity, values corrected based on 25°C were used.
- Viscosity at 25°C (cps): Measured with a Brookfield viscometer under the conditions of spindle 62 and 100 rpm.
- Zeta potential (mV): The zeta potential at 25°C was measured using a Malvern Zetasizer instrument.

**[Table 2]**

| Classification | Final Conversion Rate (%) | Initial Conversion Rate (%) | Average Particle Diameter (Å) | Ionic Conductivity (µS/cm) | Solid Content (wt%) | Viscosity at 25°C (cps) | Zeta Potential (mV) |
|---|---|---|---|---|---|---|---|
| Example 1 | 96.2 | 28.0 | 1,230 | 286.9 | 54.7 | 290 | -75.9 |
| Example 2 | 97.8 | 31.0 | 1,250 | 282.3 | 50.2 | 210 | -71.1 |
| Example 3 | 98.3 | 35.0 | 1,180 | 279.0 | 53.3 | 280 | -70.3 |
| Comparative Example 1 | 91.0 | 17.6 | 1,580 | 289.3 | 54.9 | 290 | -71.9 |
| Comparative Example 2 | 88.0 | 11.5 | 1,620 | 291.9 | 53.6 | 270 | -74.2 |
| Comparative Example 3 | 99.1 | 48.0 | 900 | 239.2 | 55.6 | >10,000 | -54.0 |

Referring to Table 2, Examples 1 to 3 all showed high conversion rates. Compared to the latex of Comparative Example 3 in which no ionic compound was added, the ionic conductivity was higher, and the magnitude of the zeta potential, which indicates the electrical stability of the latex particles, was measured to be large. Furthermore, the latexes of Examples 1 to 3 exhibited low viscosity while achieving a large particle diameter of 1,000 Å or more and a high solid content of 50 wt% or more.

In the case of Comparative Examples 1 and 2, compared to the latex of Comparative Example 3 in which no ionic compound was added, the ionic conductivity was higher, the magnitude of the zeta potential was measured to be large, and they showed similar physical properties to Examples 1 to 3 in that they exhibited low viscosity while achieving a large particle diameter of 1,000 Å or more and a high solid content of 50 wt% or more. However, the reaction rate was slow, so the initial conversion rate was lower than that of the Examples, and the final conversion rate was low, confirming that a relatively large amount of unreacted monomers existed even after the completion of polymerization.

The latex of Comparative Example 3, in which no ionic compound was added, showed a relatively small magnitude of zeta potential, and due to its low stability, it was difficult to simultaneously achieve large particle diameter, high solid content, and low viscosity. Furthermore, the reaction rate was fast, resulting in a small particle diameter and high viscosity, and there were difficulties in product storage and reaction heat control. In particular, the latex of Comparative Example 3, which has a small particle diameter, had a problem that the viscosity rapidly increased when the solid content was increased through concentration.

### Preparation Example

To 100 parts by weight of each carboxylic acid-modified nitrile-based copolymer latex prepared according to the Examples and Comparative Examples, 1.8 parts by weight of sulfur (S), 0.7 parts by weight of zinc oxide (ZnO), and 1.2 parts by weight of zinc dibutyldithiocarbamate (ZDBC) as a vulcanization accelerator were added. Thereafter, a 4% aqueous potassium hydroxide solution and secondary distilled water were introduced to prepare a latex composition for dip molding having a solid content concentration of 20% and a pH of 10.0.

### Experimental Example 2

Rectangular specimens having a width of 30 mm, a length of 135 mm, and a thickness of 0.072 to 0.074 mm were manufactured using each latex composition for dip molding prepared according to the Preparation Example, and the durability of the specimens was evaluated. The results are shown in Table 3 below.
- Durability: A solution with a pH of 4 was prepared using citric acid and maintained at a condition of 35°C. The rectangular specimen was immersed in the solution while being elongated by 20% in the longitudinal direction. The process of elongating the specimen to 50% elongation for 10 seconds, fixing it for 2 seconds, and then relaxing it to 20% elongation for 10 seconds was repeated, and the time until the specimen broke was measured.

**[Table 3]**

| Classification | Specimen Thickness (mm) | Durability |
|---|---|---|
| Example 1 | 0.072 | 4 hours or more |
| Example 2 | 0.073 | 4 hours or more |
| Example 3 | 0.073 | 4 hours or more |
| Comparative Example 1 | 0.074 | 0.9 hours |
| Comparative Example 2 | 0.074 | 0.7 hours |
| Comparative Example 3 | 0.073 | 3 hours |

Referring to Table 3, the specimens manufactured using the latexes of Examples 1 to 3 exhibited superior durability in actual use compared to the specimens manufactured using the latexes of Comparative Examples 1 to 3. In particular, the specimens manufactured using the latexes of Comparative Example 1 or 2 broke within 1 hour, confirming that their durability in actual use was insufficient.

The foregoing description of the present specification is for illustrative purposes, and those skilled in the art to which one aspect of the present specification pertains will understand that it can be easily modified into other specific forms without changing the technical spirit or essential features described in the present specification. Therefore, the embodiments described above should be understood as illustrative in all respects and not restrictive. For example, each component described as a single form may be implemented in a distributed manner, and likewise, components described as distributed may also be implemented in a combined form.

The scope of the present specification is indicated by the claims that follow, and all changes or modified forms derived from the meaning and scope of the claims and their equivalent concepts should be construed as being included in the scope of the present specification.

## Claims

1. A composition for latex polymerization, comprising a conjugated diene monomer, an ethylenically unsaturated nitrile monomer, an ethylenically unsaturated acid monomer, an ionic organic compound, and an ionic inorganic compound,
wherein a weight ratio of the ionic inorganic compound to the ionic organic compound is 4.7 or more.

2. The composition for latex polymerization according to claim 1, wherein the conjugated diene monomer is one selected from the group consisting of 1,3-butadiene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, and combinations of two or more thereof.

3. The composition for latex polymerization according to claim 1, wherein the ethylenically unsaturated nitrile monomer is one selected from the group consisting of acrylonitrile, methacrylonitrile, fumaronitrile, α-chloronitrile, α-cyanoethylacrylonitrile, and combinations of two or more thereof.

4. The composition for latex polymerization according to claim 1, wherein the ethylenically unsaturated acid monomer is one selected from the group consisting of acrylic acid, methacrylic acid, itaconic acid, maleic acid, fumaric acid, maleic anhydride, citraconic anhydride, styrenesulfonic acid, monobutyl fumarate, monobutyl maleate, mono-2-hydroxypropyl maleate, and combinations of two or more thereof.

5. The composition for latex polymerization according to claim 1, wherein the ionic organic compound is one selected from the group consisting of ethylenediaminetetraacetic acid (EDTA) or its sodium salt, ethylene glycol tetraacetic acid (EGTA) or its sodium salt, nitrilotriacetic acid (NTA) or its sodium salt, iminodiacetic acid (IDA) or its sodium salt, quinolinic acid (QNA) or its sodium salt, and combinations of two or more thereof.

6. The composition for latex polymerization according to claim 1, wherein the ionic inorganic compound is one selected from the group consisting of potassium sulfate (K₂SO₄), sodium carbonate (Na₂CO₃), sodium chloride (NaCl), potassium chloride (KCl), calcium chloride (CaCl₂), magnesium chloride (MgCl₂), sodium nitrate (NaNO₃), potassium nitrate (KNO₃), calcium nitrate (Ca(NO₃)₂), magnesium nitrate (Mg(NO₃)₂), sodium sulfate (Na₂SO₄), calcium sulfate (CaSO₄), magnesium sulfate (MgSO₄), sodium hydroxide (NaOH), potassium hydroxide (KOH), calcium hydroxide (Ca(OH)₂), magnesium hydroxide (Mg(OH)₂), sodium bicarbonate (NaHCO₃), potassium bicarbonate (KHCO₃), potassium carbonate (K₂CO₃), sodium hydrogen sulfite (NaHSO₄), potassium hydrogen sulfite (KHSO₄), sodium pyrophosphate (Na₄P₂O₇), potassium pyrophosphate (K₄P₂O₇), trisodium phosphate (Na₃PO₄), tripotassium phosphate (K₃PO₄), disodium hydrogen phosphate (Na₂HPO₄), dipotassium hydrogen phosphate (K₂HPO₄), and combinations of two or more thereof.

7. The composition for latex polymerization according to claim 1, wherein the composition comprises 30 to 98 parts by weight of the conjugated diene monomer, 1 to 55 parts by weight of the ethylenically unsaturated nitrile monomer, and 0.001 to 20 parts by weight of the ethylenically unsaturated acid monomer.

8. The composition for latex polymerization according to claim 1, wherein the composition further comprises water, an emulsifier, a polymerization initiator, and a molecular weight modifier.

9. A latex for dip molding, comprising a copolymer derived from the composition for latex polymerization according to claim 1.

10. A dip-molded article manufactured from the latex for dip molding according to claim 9.

11. 12. The dip-molded article according to claim 10, wherein the dip-molded article is surgical gloves, medical gloves, gloves for agricultural/livestock product processing, industrial gloves, condoms, cosmetic materials, catheters, or healthcare molded articles.
